# EUROPÄISCHE PATENTSCHRIFT

(11) **EP 2 129 897 B1**
(45) Veröffentlichungstag und Bekanntmachung des Hinweises auf die Patenterteilung: **15.09.2010**
(21) Anmeldenummer: 08717629.3
(22) Anmeldetag: 11.03.2008
(51) Int. Cl.: F02D 41/20, H01L 41/04

(54) **ANSTEUERSCHALTUNG UND ANSTEUERVERFAHREN FÜR EIN PIEZOELEKTRISCHES ELEMENT**
CONTROL CIRCUIT AND CONTROL METHOD FOR A PIEZOELECTRIC ELEMENT
CIRCUIT DE COMMANDE ET PROCÉDÉ DE COMMANDE D'UN ÉLÉMENT PIEZOÉLECTRIQUE

(30) Priorität: 26.03.2007 DE 102007014330
(43) Veröffentlichungstag der Anmeldung: 09.12.2009
(73) Patentinhaber: Robert Bosch GmbH, 70442 Stuttgart (DE)
(72) Erfinder: SCHESTAG, Joerg, 75223 Niefern-Oeschelbronn (DE); DRAESE, Nils, 70439 Stuttgart (DE)
(86) Internationale Anmeldenummer: PCT/EP2008/052883
(87) Internationale Veröffentlichungsnummer: WO 2008/116746

(56) Entgegenhaltungen:
- EP-A- 1 138 903
- DE-A1- 19 903 555

## Beschreibung

Die vorliegende Erfindung betrifft eine Ansteuerschaltung und ein Ansteuerverfahren für ein piezoelektrisches Element zum Einspritzen von Kraftstoff in einen Brennraum einer Brennkraftmaschine.

### STAND DER TECHNIK

Ansteuervorrichtungen für piezoelektrische Elemente werden z.B. in Kraftstoffeinspritzsystemen eines Kraftfahrzeugs eingesetzt. Die piezoelektrische Elemente dienen als Stellglieder, wobei die Funktionsfähigkeit des Kraftstoffeinspritzsystems auf einer exakten Ansteuerung der Stellglieder mit einem Steuerstrom beruht.

In der DE 10 2004 037 720 A1 ist eine Ansteuerschaltung für ein Stellglied beschrieben, wobei ein piezoelektrisches Element angesteuert wird, welches beispielsweise eine Ventilnadel eines Einspritzventils bewegt, um eine Kraftstoffeinspritzung in einen Brennraum der Brennkraftmaschine zu bewirken.

In der DE 10 2004 058 671 A1 ist eine weitere elektrische Schaltung zur Ansteuerung von piezoelektrischen Elementen insbesondere einer Kraftstoffeinspritzanlage eines Kraftfahrzeugs offenbart, welche Reihenschaltungen von piezoelektrischen Elementen und Auswahltransistoren aufweist, die zueinander parallel geschaltet sind. Die Sekundärseite eines Gleichspannungswandlers ist über eine Diode mit einem Pufferkondensator verbunden, welcher ein Betriebspotential von bis zu 330 V Gleichspannung gegen ein Massenpotential des Kraftfahrzeugs bereitstellt. Das Betriebspotential kann den Anoden der piezoelektrischen Elemente über mit einem Takt ansteuerbare Schalttransistoren zugeführt werden, wobei jeweils ein piezoelektrisches Element mittels der Auswahltransistoren ausgewählt wird. Hierbei sind zwei in Serie geschaltete Schalttransistoren bereitgestellt, deren gemeinsamer Anschlusspunkt mit einer Anode des anzusteuernden piezoelektrischen Elements gekoppelt ist, und von welchen jeweils einer zur Aufladung bzw. Entladung der Anode des piezoelektrischen Elements vorgesehen ist. An der Kathode liegt dabei Massepotential an.

Aus der DE 199 03 555 A1 ist eine Ansteuerschaltung für ein piezoelektrisches Element zum Einspritzen von Kraftstoff in einen Brennraum einer Brennkraftmaschine bekannt. Diese Einrichtung umfasst eine Spannungsquelle, die an mehreren Anschlusspunkten verschiedene Spannungspegel bereitstellt.

Über eine Umschaltsteuereinheit sind die Anschlusspunkte mit dem piezoelektrischen Element verbunden.

Wird nun eines der piezoelektrischen Elemente über den zur Aufladung vorgesehenen Schalttransistor aufgeladen, dann wirkt das piezoelektrische Element auf die Ventilnadel eines Einspritzventils, und Kraftstoff wird in den Brennraum der Brennkraftmaschine eingespritzt. Bei anschließender Entladung über den zur Entladung vorgesehenen Schalttransistor führt das piezoelektrische Element die Ventilnadel zurück, so dass sich das Ventil wieder schließt.

Um die Einspritzung gemäß einem gewünschten Einspritzprofil zu einem möglichst exakt definierten Zeitpunkt in präziser Dosierung vornehmen zu können, ist es wünschenswert, das Ventil durch das piezoelektrische Element mit möglichst großem Hub möglichst rasch öffnen und schließen zu können. Bei bekannten Ansteuerschaltungen wird daher zur Aufladung der Anode des piezoelektrischen Elements ein möglichst hohes Betriebspotential verwendet, um so ein Ansteuersignal mit möglichst großer Amplitude und hoher Flankensteilheit erzeugen zu können.

Hierbei ist das maximal zu verwendende Betriebspotential jedoch durch eine maximale Spannungsfestigkeit des piezoelektrischen Elements begrenzt, da es bei Anlegen von Spannungen oberhalb dieses Werts zu einer Zerstörung des piezoelektrischen Elements kommen würde. Weiterhin erfordert der Einsatz höherer Spannungen einen höheren Aufwand bei Verkabelungen und Steckverbindungen und kann zudem zu einer Verschlechterung der elektromagnetischen Verträglichkeit der Ansteuerschaltung führen, so dass zusätzlicher Aufwand für Abschirmungen an der Ansteuerschaltung selbst wie auch an anderen elektronischen Einrichtungen im Fahrzeug entsteht.

Die der vorliegenden Erfindung zugrundeliegende Aufgabe besteht daher darin, eine Ansteuerschaltung zu schaffen, die einen vergrößerten Hub und eine höhere Schließ- und Öffnungsgeschwindigkeit der Ventilnadel erreicht und damit ermöglicht, das Einspritzprofil anforderungsgerecht mit größerer Variationsbreite variabel zu gestalten, ohne dass das Betriebspotential über einen maximal festgelegten Wert erhöht werden muss.

### OFFENBARUNG DER ERFINDUNG

Zur Lösung wird erfindungsgemäß eine Ansteuerschaltung für ein piezoelektrisches Element zum Einspritzen von Kraftstoff in einen Brennraum einer Brennkraftmaschine mit den Merkmalen des Patentanspruchs 1 vorgeschlagen. Ferner wird ein Ansteuerverfahren zum Ansteuern eines piezoelektrischen Elements zum Einspritzen von Kraftstoff in einen Brennraum einer Brennkraftmaschine angegeben, welches die in dem nebengeordneten Anspruch 9 enthaltenen Schritte aufweist.

Weitere Ausgestaltungen der Erfindung ergeben sich aus den Unteransprüchen.

Ein wesentlicher Gedanke der Erfindung besteht darin, das piezoelektrische Element nicht nur zyklisch unipolar aufzuladen und zu entladen, sondern vielmehr die Polarität der durch die Ansteuerschaltung an den Elektroden des piezoelektrischen Elements anzulegenden Spannung während eines Einspritzzyklus umzukehren.

Hierdurch ergibt sich zum einen der Vorteil, dass der Betrag der Differenz zwischen den vorzeichenbehafteten Spannungswerten, die in beiden Richtungen jeweils während eines Einspritzvorgangs an das piezoelektrische Element angelegt werden können, sich vergrößert. Dadurch erhöht sich der erzielbare mechanische Hub des Einspritzventils, ohne dass es notwendig wäre, den maximalen Betrag der zu einem beliebigen Zeitpunkt am piezoelektrischen Element anliegenden Spannung zu erhöhen.

Ein weiterer wesentlicher Vorteil besteht darin, dass die Flankensteilheit des Ansteuerstromsignals zunimmt, was eine schnelleres Öffnen und Schließen des Ventils und damit eine präzisere Festlegung des Einspritzzeitpunkts ermöglicht. Die größere Flankensteilheit erlaubt es weiterhin, die an dem piezoelektrischen Element jeweils anliegende Spannung und damit die mechanische Auslenkung des Elements und die Menge des eingespritzten Kraftstoffs mit hoher Genauigkeit zu regeln.

Gemäß einem allgemeinen Gesichtspunkt der Erfindung wird eine Ansteuerschaltung für ein piezoelektrisches Element zum Einspritzen von Kraftstoff in einen Brennraum einer Brennkraftmaschine bereitgestellt, mit einer Spannungsquelle, die an einem ersten, zweiten und dritten Anschlusspunkt ein niedrigeres, mittleres bzw. höheres elektrisches Potential bereitstellt, wobei der zweite Anschlusspunkt zur Kopplung an eine erste Elektrode des piezoelektrischen Elements ausgebildet ist, einem Ladeschaltelement, das eine zweite Elektrode des piezoelektrischen Elements mit dem dritten Anschlusspunkt der Spannungsquelle verbindet, und einem Entladeschaltelement, das die zweite Elektrode des piezoelektrischen Elements mit dem ersten Anschlusspunkt der Spannungsquelle verbindet.

Die beschriebene Ansteuerschaltung ermöglicht es somit, durch geeignetes Ansteuern der Schaltelemente im Betrieb, die zweite Elektrode wahlweise mit dem niedrigeren oder mit dem höheren Potential zu verbinden, während die erste Elektrode durch Kopplung an das mittlere Potential gekoppelt ist.

Gemäß einer bevorzugten Weiterbildung ist der erste Anschlusspunkt der Spannungsquelle zur Kopplung an ein Massepotential der Brennkraftmaschine ausgebildet ist. Dies hat den Vorteil, dass das Entladeschaltelement sich auf einem niedrigen Potential gegenüber Masse befindet und daher durch einen Transistor gebildet werden kann, der ohne Zwischenschaltung einer spannungsfesten Treiberstufe direkt von einer integrierten Schaltung angesteuert wird. Vorzugsweise ist die Spannungsquelle zur Speisung aus einem Gleichstromnetz ausgebildet, wobei der zweite und dritte Anschlusspunkt eine gleiche Polarität gegenüber dem Massepotential aufweisen wie das Gleichstromnetz. Auf diese Weise kann z.B. bei einem Bordnetz eines Kraftfahrzeugs mit positiver Polarität gegen Masse die Ansteuerung des piezoelektrischen Elements ausschließlich mit Potentialen erfolgen, die ebenfalls positiv gegen Masse sind, wodurch es möglich wird, diese Potentiale durch solche Schaltkreise steuern und regeln zu lassen, die allein aus dem Bordnetz entnommener Gleichspannung positiver Polarität gegen Masse gespeist werden. Ebenso kann z.B. bei einem Bordnetz mit negativer Polarität gegen Masse die Ansteuerung des piezoelektrischen Elements ausschließlich mit Potentialen erfolgen, die ebenfalls negativ gegen Masse sind, wodurch es möglich wird, diese Potentiale durch solche Schaltkreise steuern und regeln zu lassen, die allein aus dem Bordnetz entnommener Gleichspannung negativer Polarität gegen Masse gespeist werden.

An piezoelektrische Elemente kann typischerweise in einer der möglichen Polaritätsrichtungen eine größere maximale Spannung angelegt werden als in der jeweils umgekehrten Polaritätsrichtung. Gemäß einer bevorzugten Weiterbildung der erfindungsgemäßen Ansteuerschaltung weist eine Spannung zwischen dem höheren und dem mittleren Potential einen größeren Betrag auf, als eine Spannung zwischen dem mittleren und dem niedrigeren Potential. Dies hat den Vorteil, dass das piezoelektrische Element so betrieben werden kann, dass das Mittenpotential und in Folge die erste Elektrode des piezoelektrischen Elements sowie insgesamt ein möglichst großer Teil der Ansteuerschaltung auf einem möglichst niedrigen Potential gegenüber Masse zu liegen kommen. Dadurch verringert sich der Schaltungs- und Isolationsaufwand, während sich die elektromagnetische Verträglichkeit verbessert.

Gemäß einer bevorzugten Weiterbildung umfasst die Spannungsquelle einen Gleichspannungswandler, insbesondere einen Sperrwandler oder einen Eintakt-Durchflusswandler. Hierdurch können die benötigten Potentiale bei hoher Effizienz und geringem Schaltungsaufwand aus einem vorhandenen Gleichstromnetz, z.B. dem Bordnetz eines Kraftfahrzeugs gewonnen werden. Insbesondere vorteilhaft ist der Sperrwandler wegen seines einfacheren Schaltungsaufbaus und geringeren Platzbedarfs, während ein Eintakt-Durchflusswandler bei höheren benötigten Ausgangsleistungen überlegen ist, z.B. bei der Anwendung mit größeren Brennkraftmaschinen.

Vorzugsweise umfasst der Gleichspannungswandler einen Transformator mit einer Primärwicklung und einer ersten und einer zweiten Sekundärwicklung, wobei ein Primärkreis sowie ein erster und zweiter Sekundärkreis vorgesehen sind. Der Primärkreis beinhaltet ein Primärkreisschaltelement und die Primärwicklung des Transformators. Der Sekundärkreis beinhaltet ein erstes Gleichrichterelement, einen ersten Kondensator und die erste Sekundärwicklung, während der zweite Sekundärkreis ein zweites Gleichrichterelement, einen zweiten Kondensator und die zweite Sekundärwicklung des Transformators beinhaltet. Dies ist besonders vorteilhaft, da sowohl die Spannung zwischen dem niedrigeren und dem mittleren Potential als auch die Spannung zwischen dem mittleren und dem höheren Potential durch einen Gleichspannungswandler mit einem einzigen Primärkreis erzeugt werden können, was den Schaltungsaufwand reduziert. Vorzugsweise sind der erste und zweite Kondensator in Reihe geschaltet, wobei die miteinander verbundenen Anschlussenden der Kondensatoren mit dem zweiten Anschlusspunkt der Spannungsquelle gekoppelt sind. Die jeweils anderen Anschlussenden des ersten und zweiten Kondensators sind mit dem ersten bzw. dem dritten Anschlusspunkt der Spannungsquelle gekoppelt.

Vorzugsweise umfasst die Spannungsquelle eine Regeleinheit zur Regelung einer Gesamtspannung zwischen dem ersten und dritten Anschlusspunkt, die an den ersten und dritten Anschlusspunkt der Spannungsquelle angeschlossen ist und das Primärkreisschaltelement in Abhängigkeit von der Gesamtspannung zyklisch aktiviert. Dies ist vorteilhaft, da so die für den gesamten Hub des piezoelektrischen Elements entscheidende Gesamtspannung über beide in Reihe geschalteten Sekundärkreise hinweg geregelt wird. Durch die Verwendung nur einer einzigen Regeleinheit bleibt der Schaltungsaufwand begrenzt, insbesondere wenn mittels eines Spannungsteilers die Gesamtspannung auf einen für die Regeleinheit verträglichen Wert erniedrigt wird. Vorzugsweise umfasst die Regeleinheit eine Kennlinie, die einen Zusammenhang zwischen der Gesamtspannung (als zu regelnder Ausgangsspannung der Spannungsquelle) und einer Aktivierungsdauer des Primärkreisschaltelements festlegt. So kann die Regeleinheit mittels der Kennlinie auf die besonderen Lastanforderungen im Betrieb der Brennkraftmaschine eingestellt werden. Vorteilhafterweise legt dabei die Kennlinie einen dreifachen Zusammenhang zwischen einer Netzspannung (als die Spannungsquelle speisender Eingangsspannung), der Gesamtspannung (als zu regelnder Ausgangsspannung der Spannungsquelle) und der Aktivierungsdauer des Primärkreisschaltelements fest, was ermöglicht, die Spannungsquelle und damit den Betrieb der Brennkraftmaschine gegenüber Schwankungen der Netzspannung hochgradig robust zu machen.

Gemäß dem erfindungsgemäßen Ansteuerverfahren zum Ansteuern eines piezoelektrischen Elements zum Einspritzen von Kraftstoff in einen Brennraum einer Brennkraftmaschine werden zunächst ein Massepotential der Brennkraftmaschine und eine vorbestimmten Ladepotentials bereitgestellt. Eine erste Elektrode des piezoelektrischen Elements wird auf ein vorbestimmtes Mittenpotential zwischen dem Massepotential und dem Ladepotential festgelegt. An eine zweite Elektrode des piezoelektrischen Elements wird nun das Ladepotential angelegt. In weiteren Schritten wird die zweite Elektrode vom Ladepotential getrennt und das Massenpotential an die zweite Elektrode angelegt. Auf diese Weise wird das piezoelektrische Element durch einen Entladestrom mit besonders großer Flankensteilheit entladen, da im Moment des Anlegens des Massepotentials an die zweite Elektrode sich die erste Elektrode auf dem Mittenpotential befindet und somit eine Spannung an das piezoelektrische Element angelegt wird, die im Vergleich zu der Spannung, mit der das Element aufgeladen wurde von umgekehrter Polarität ist. Daher wirken beide Spannungen bei der Erzeugung des Entladestroms zusammen.

### KURZE BESCHREIBUNG DER ZEICHNUNGEN

Die vorliegende Erfindung wird nachfolgend anhand bevorzugter Ausführungsformen und beigefügter Figuren erläutert. In den Figuren zeigen:
- Fig. 1: ein schematisches Blockschaltbild einer Ansteuerschaltung für ein piezoelekt- risches Element zum Einspritzen von Kraftstoff in einen Brennraum einer Brennkraftmaschine, gemäß einer Ausführungsform der vorliegenden Erfin- dung; und
- Fig. 2: ein Schaltdiagramm einer Spannungsquelle für die Ansteuerschaltung für ein piezoelektrisches Element aus Fig. 1.

### AUSFÜHRUNGSFORMEN DER ERFINDUNG

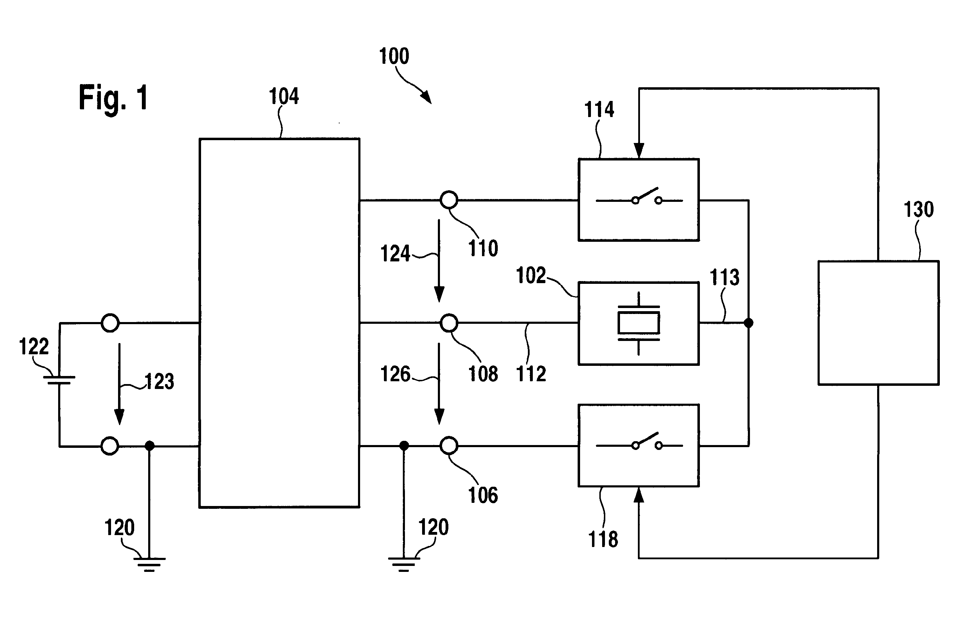

Figur 1 zeigt ein schematisches Blockschaltbild einer Ansteuerschaltung 100 für ein piezoelektrisches Element 102 zum Einspritzen von Kraftstoff in einen Brennraum einer Brennkraftmaschine, z.B. einer Brennkraftmaschine, die ein Kraftfahrzeug antreibt.

Die Ansteuerschaltung 100 umfasst eine Spannungsquelle 104, die aus einem Gleichspannungsnetz 122 gespeist wird, das eine Netzspannung 123 von beispielsweise 12 V Gleichspannung bereitstellt. Dabei ist der negative Pol des Gleichspannungsnetzes 122 mit einem Massepotential 120 des Kraftfahrzeugs einschließlich der Brennkraftmaschine verbunden, so dass das Gleichspannungsnetz 122 an seinem anderen Pol ein positives Potential von 12 V gegenüber dem Massepotential 120 bereitstellt. Typischerweise verfügen Kraftfahrzeuge über ein derartiges oder ähnliches Gleichspannungsnetz 122 als Bordnetz, so dass die gezeigte Ansteuerschaltung aus dem regulär vorhandenen Bordnetz eines Kraftfahrzeugs betrieben werden kann.

Die Spannungsquelle 104 verfügt ausgangsseitig über drei Anschlusspunkte 106, 108, 110, an denen sie zwei Spannungen 124, 126 bereitstellt. Ein erster Anschlusspunkt 106 befindet sich dabei auf Massepotential 120. Zwischen einem zweiten 108 und dritten 110 Anschlusspunkt wird eine Gleichspannung 124 als Ladespannung bereitgestellt, die die obere Grenze einer Spannung darstellt, mit der das piezoelektrische Element 102 im Betrieb aufgeladen werden soll. Beispielsweise hat die Ladespannung 124 einen Betrag von 220 V. Die Ansteuerschaltung 100 kann alternativ zusätzliche Regeleinrichtungen (nicht gezeigt) umfassen, die die im Betrieb an das piezoelektrische Element angelegte Spannung überwachen und begrenzen. In diesem Fall kann die Ladespannung 124 einen größeren Betrag aufweisen als die maximal an das piezoelektrische Element anzulegende Spannung, beispielsweise 240 bis 250 V.

Zwischen dem auf Massepotential 120 liegenden ersten und dem zweiten 108 Anschlusspunkt stellt die Spannungsquelle 104 eine weitere Gleichspannung 126 als Entladespannung auf, die im Betrieb an das piezoelektrische Element 102 angelegt werden soll, um es zu entladen und gegebenenfalls bis maximal zum Betrag der Entladespannung 126 mit umgekehrter Polarität aufzuladen. Beispielsweise hat die Entladespannung 126 einen Betrag von 45 V. Wenn die Ansteuerschaltung 100 wie oben erwähnt zusätzliche Regeleinrichtungen (nicht gezeigt) umfasst, die die im Betrieb an das piezoelektrische Element angelegte Spannung überwachen und begrenzen, kann die umgekehrte Aufladung des piezoelektrische Elements 102 im Betrieb auch nur bis zu einem kleineren maximalen Spannungsbetrag erfolgen, oder auch ganz entfallen.

Die zwischen dem ersten Anschlusspunkt 106 und dem zweiten Anschlusspunkt 108 bereitgestellte Entladespannung 126 hat die gleiche Polarität wie die zwischen dem zweiten Anschlusspunkt 108 und dem dritten Anschlusspunkt 110 bereitgestellte Ladespannung 124, so dass sich beide zu einer Gesamtspannung addieren. Außerdem haben Lade- 124 und Entladespannung 126 die gleiche Polarität wie das Gleichstromnetz 122. Die Spannungsquelle 104 stellt mithin an ihrem ersten 106, zweiten 108 und dritten 110 Anschlusspunkt ein im Verhältnis zum Massepotential 120 niedrigeres (d.h. mit dem Massepotential 120 identisches) Potential, ein mittleres Potential (von +45 V gegen Masse 120 im vorliegenden Beispiel) bzw. ein höheres Potential (von +45 V + 220 V = +265 V im vorliegenden Beispiel) bereit, wobei die Begriffe "niedrig", "mittel" und "hoch" sich auf den jeweiligen Spannungsbetrag zum Massepotential 120 beziehen, so dass sie bei einer alternativen Ausführungsform der Erfindung mit Umkehrung aller Polaritäten ebenfalls gelten.

Das piezoelektrische Element 102 ist mit einer ersten Elektrode 112 an den zweiten Anschluss 108 der Spannungsquelle 104 gekoppelt. Mit den beispielhaft angegebenen Spannungen liegt daher die erste Elektrode 112 im Betrieb konstant auf dem mittleren Potential von +45 V. Die zweite Elektrode 113 des piezoelektrischen Elements 102 ist über ein Ladeschaltelement 114 und ein Entladeschaltelement 118 jeweils schaltbar mit dem dritten 110 bzw. ersten 106 Anschlusspunkt verbunden. Die Schaltelemente 114, 118 sind mit einer Taktsignaleinheit 130 verbunden, die die Schaltelemente 114, 118 über ein Taktsignal koordiniert ansteuert.

Im Betrieb stellt zunächst die Spannungsquelle 104 an ihren Anschlusspunkten 106, 108, 110 das niedrigere, mittlere bzw. höhere Potential bereit. Damit liegt das mittlere Potential von +45 V an der ersten Elektrode des piezoelektrischen Elements 102 an. Im Laufe eines Taktzyklus der Taktsignaleinheit 130 sendet die Taktsignaleinheit 130 ein Signal an die Ladeschalteinheit 114, so dass diese die Verbindung zwischen der zweiten Elektrode 113 des piezoelektrischen Elements 102 und dem dritten Anschlusspunkt 110 der Spannungsquelle 104 leitend schaltet. Hierdurch wird die Ladespannung 124 von 220 V an das piezoelektrische Element 102 angelegt. Nach vollständiger Aufladung liegt die zweite Elektrode 113 auf einem Potential von +265 V. Die Taktsignaleinheit 130 sendet in diesem Fall ein Taktsignal an die Ladeschalteinheit 114, die die Verbindung zwischen der zweiten Elektrode 113 des piezoelektrischen Elements 102 und dem dritten Anschlusspunkt 110 der Spannungsquelle 104 wieder trennt. Um den durch das piezoelektrische Element 102 fließenden Ladestrom während der Aufladung zu begrenzen, z.B. damit Beschädigungen vermieden werden, kann weiterhin vorgesehen sein, dass die Taktsignaleinheit 130 die Ladeschalteinheit 114 den Ladestrom ein- oder mehrmals zwischenzeitlich unterbrechen lässt, bevor das piezoelektrische Element 102 auf den vollen Wert der gewünschten Spannung aufgeladen ist. Die Taktsignaleinheit 130 kann die Unterbrechung z.B. auslösen, wenn der Ladestrom einen vorbestimmten Maximalwert überschreitet, um dann bei Unterschreiten eines weiteren vorbestimmten Schwellwerts oder auch nach Verstreichen einer vorbestimmten Zeit wiederum ein Taktsignal an die Ladeschalteinheit 114 zu senden, das diese veranlasst, den Ladevorgang fortzusetzen.

Soll das piezoelektrische Element 102 im Laufe des Taktzyklus entladen werden, sendet die Taktsignaleinheit 130 ein Signal an die Entladeschalteinheit 118, so dass diese die Verbindung zwischen der zweiten Elektrode 113 des piezoelektrischen Elements 102 und dem ersten Anschlusspunkt 106 der Spannungsquelle 104 leitend schaltet. Hierdurch wird die Entladespannung 126 von 45 V an das piezoelektrische Element 102 angelegt, und zwar umgekehrt zur Polarität der Spannung von 220 V, mit der das piezoelektrische Element 102 an diesem Punkt noch aufgeladen ist. Die beiden Spannungen addieren sich in ihrer Wirkung, so dass ein hoher Entladestrom durch das piezoelektrische Element 102 fließt, während das Potential der zweiten Elektrode 113 abfällt. Ist das Potential der zweiten Elektrode 113 bis auf das mittlere Potential der Spannungsquelle 104 abgefallen, fließt der Entladestrom durch die Wirkung der Entladespannung 126 weiterhin, bis das piezoelektrische Element 102 mit umgekehrter Polarität auf eine Spannung von 45 V aufgeladen ist. Die Taktsignaleinheit 130 kann gegebenenfalls den Entlade- bzw. Umladevorgang vorzeitig abbrechen, z.B. sobald ein gewünschtes Potential der zweiten Elektrode 113 erreicht wird, das sowohl höher als auch niedriger als das mittlere Potential der Spannungsquelle 104 liegen kann, und auch zur Begrenzung des Entlade- bzw. Umladestroms zwischenzeitig ein- oder mehrmals unterbrechen, analog wie oben für den Ladevorgang beschrieben.

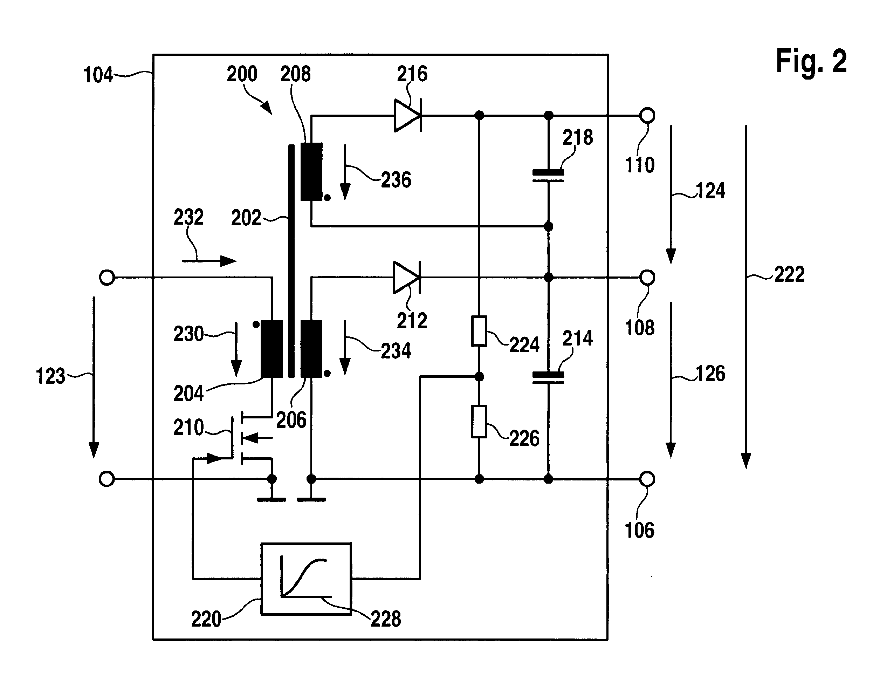

Figur 2 zeigt ein beispielhaftes Schaltdiagramm einer Spannungsquelle 104, wie sie für die Ansteuerschaltung für ein piezoelektrisches Element aus Fig. 1 eingesetzt werden kann. Die Spannungsquelle 104 enthält einen Gleichspannungswandler 200, der nach dem Sperrwandlerprinzip arbeitet. Der Gleichspannungswandler 200 umfasst einen Transformator 202 mit einer Primärwicklung 204 und zwei Sekundärwicklungen 206, 208.

Die Primärwicklung 204 bildet gemeinsam mit einem Transistor 210 als ein durch eine Regeleinheit 220 ansteuerbares Schaltelement einen Primärkreis, der zum Anschluss an die Netzspannung 123 des Bordnetzes ausgebildet ist. Die erste Sekundärwicklung 206 bildet mit einer ersten Diode 212 und einem ersten Pufferkondensator 214 einen ersten Sekundärkreis, während die zweite Sekundärwicklung 208 mit einer zweiten Diode 216 und einem zweiten Pufferkondensator 218 einen zweiten Sekundärkreis bildet. Das mit der ersten Diode 212 verbundene Anschlussende des ersten Pufferkondensators 214 und das nicht mit der zweiten Diode 216 verbundene Anschlussende des zweiten Pufferkondensators sind miteinander sowie mit dem zweiten Anschlusspunkt 108 der Spannungsquelle 104 verbunden. Die jeweils anderen Anschlussenden des ersten 214 bzw. zweiten Pufferkondensators sind mit dem ersten 106 bzw. dritten 110 Anschlusspunkt der Spannungsquelle 104 verbunden. Beide Kondensatoren 214, 218 sind somit in Reihe geschaltet.

Im Betrieb wird der Primärkreis an die Netzspannung 123 des Bordnetzes angeschlossen. Die Regeleinheit 220 schaltet den Transistor 210 leitend, so dass die eingangsseitig anliegende Netzspannung 123 gleich der an der Primärwicklung 204 anliegenden Spannung 230 ist und der Primärstrom 232 linear ansteigt. In dieser Phase wird Energie über die Primärwicklung 204 im Kern des Transformators 202 gespeichert. Die Sekundärwicklungen 206, 208 sind in dieser Phase stromlos, da die Dioden 212, 216 sperren. Wird der Transistor 210 nun durch die Regeleinheit 220 gesperrt, werden die Dioden 212, 216 leitend, und die im Transformatorkern gespeicherte Energie wird sekundärseitig an die Kondensatoren 214, 218 abgegeben. Dabei wird die gespeicherte Energie gerade so aufgeteilt, dass die Sekundärspannungen 234, 236 und damit die Ausgangsspannungen 124, 126 sich entsprechend des Windungsverhältnisses der Sekundärwicklungen 206, 208 aufteilen. Die Ausgangsspannungen 124, 126 summieren sich aufgrund der Reihenschaltung der Kondensatoren 214, 216 zu einer Gesamtspannung 222.

Die Regeleinheit 220 misst während eines Taktzyklus diese an den in Reihe geschalteten Kondensatoren 214, 218 anliegende und von der Spannungsquelle 104 zwischen ihrem ersten 106 und dritten 110 Anschlusspunkt bereitgestellte, Spannung über den Spannungsteiler 224, 226 und vergleicht den Messwert intern mit einem gespeicherten Schwellwert. Liegt der Messwert unter dem Schwellwert, schaltet die Regeleinheit 220 den Transistor 210 zunächst leitend und nach Verstreichen einer Aktivierungszeit wieder nichtleitend. Die Aktivierungszeit des Transistors 210 wird dabei über ein in der Regeleinheit 220 hinterlegtes Kennlinienfeld 228 ermittelt, das die optimale Aktivierungsdauer in Abhängigkeit von der an die Primärwicklung 204 angelegten Spannung (d.h. der auch der Regeleinheit 220 zur Verfügung stehenden Netzspannung 123) angibt. Die optimale Aktivierungsdauer ist dabei diejenige, bei der pro Taktzyklus die maximal mögliche Energie übertragen wird, ohne dass der Transformator 202 in einen Sättigungsbereich gelangt. Das Kennlinienfeld 228 kann noch weitere Kennlinien umfassen, mit denen beispielsweise ein Hochlauf des Gleichspannungswandlers aus dem Ruhezustand gesteuert wird.

## Patentansprüche

1. Ansteuerschaltung (100) für ein piezoelektrisches Element (102) zum Einspritzen von Kraftstoff in einen Brennraum einer Brennkraftmaschine, mit:
- einer Spannungsquelle (104), die an einem ersten Anschlusspunkt (106) ein niedrigeres elektrisches Potential, an einem zweiten Anschlusspunkt (108) ein mittleres elektrisches Potential und an einem dritten Anschlusspunkt (100) ein höheres elektrisches Potential bereitstellt, wobei der zweite Anschlusspunkt (108) zur Kopplung an eine erste Elektrode (112) des piezoelektrischen Elements (102) ausgebildet ist;
- einem Ladeschaltelement (114), das eine zweite Elektrode (113) des piezoelektrischen Elements (102) mit dem dritten Anschlusspunkt (110) der Spannungsquelle (104) verbindet; und
- einem Entladeschaltelement (118), das die zweite Elektrode (113) des piezoelektrischen Elements (102) mit dem ersten Anschlusspunkt der Spannungsquelle (106) verbindet,
- **dadurch gekennzeichnet, dass** das niedrigere elektrische Potential, des ersten Anschlusspukts (106) der Spannungsquelle (104) ein Massepotential (120) der Brennkraftmaschine ist.

2. Ansteuerschaltung (100) nach Anspruch 1, **dadurch gekennzeichnet, dass** die Spannungsquelle (104) zur Speisung aus einem Gleichstromnetz (122) ausgebildet ist, wobei der zweite (108) und dritte (110) Anschlusspunkt eine gleiche Polarität gegenüber dem Massepotential (120) aufweisen wie das Gleichstromnetz (122).

3. Ansteuerschaltung (100) nach einem der vorhergehenden Ansprüche, **dadurch gekennzeichnet, dass** eine Spannung (124) zwischen dem höheren und dem mittleren Potential einen größeren Betrag aufweist als eine Spannung (126) zwischen dem mittleren und dem niedrigeren Potential.

4. Ansteuerschaltung (100) nach einem der vorhergehenden Ansprüche, **dadurch gekennzeichnet, dass** die Spannungsquelle (104) einen Gleichspannungswandler (200), insbesondere einen Sperrwandler (200) oder einen Eintakt-Durchflusswandler, umfasst.

5. Ansteuerschaltung (100) nach Anspruch 4, **dadurch gekennzeichnet, dass** der Gleichspannungswandler (200) umfasst:
- einen Transformator (202) mit einer Primärwicklung (204) und einer ersten (206) und einer zweiten (208) Sekundärwicklung;
- einen Primärkreis, der ein Primärkreisschaltelement (210) und die Primärwicklung (204) des Transformators (202) beinhaltet;
- einen ersten Sekundärkreis, der ein erstes Gleichrichterelement (212), einen ersten Kondensator (214) und die erste Sekundärwicklung (206) des Transformators (202) beinhaltet; und
- einen zweiten Sekundärkreis, der ein zweites Gleichrichterelement (216), einen zweiten Kondensator (218) und die zweite Sekundärwicklung (208) des Transformators (202) beinhaltet.

6. Ansteuerschaltung (100) nach Anspruch 5, **dadurch gekennzeichnet, dass** der erste (214) und zweite (218) Kondensator in Reihe geschaltet sind, wobei:
- die miteinander verbundenen Anschlussenden der Kondensatoren (214, 218) mit dem zweiten Anschlusspunkt (108) der Spannungsquelle gekoppelt sind; und
- die jeweils anderen Anschlussenden des ersten (214) und zweiten (218) Kondensators mit dem ersten (106) bzw. dritten (110) Anschlusspunkt der Spannungsquelle (104) gekoppelt sind.

7. Ansteuerschaltung (100) nach Anspruch 6, **dadurch gekennzeichnet, dass** die Spannungsquelle (104) eine Regeleinheit (220) zur Regelung einer Gesamtspannung (222) zwischen dem ersten (106) und dritten (110) Anschlusspunkt umfasst, die an den ersten (106) und dritten (110) Anschlusspunkt der Spannungsquelle (104) angeschlossen ist, insbesondere über einen Spannungsteiler (224, 226), und das Primärkreisschaltelement (210) in Abhängigkeit von der Gesamtspannung (222) zyklisch aktiviert.

8. Ansteuerschaltung (100) nach Anspruch 7, **dadurch gekennzeichnet, dass** die Regeleinheit (220) eine Kennlinie (228) umfasst, die einen Zusammenhang zwischen der Gesamtspannung (222) und einer Aktivierungsdauer des Primärkreisschaltelements (210), und insbesondere zwischen einer Netzspannung (123), der Gesamtspannung (222) und der Aktivierungsdauer festlegt.

9. Ansteuerverfahren zum Ansteuern eines piezoelektrischen Elements (102) zum Einspritzen von Kraftstoff in einen Brennraum einer Brennkraftmaschine, mit den folgenden Schritten:
- Bereitstellen eines Massepotentials (120) der Brennkraftmaschine und eines vorbestimmten Betriebspotentials;
- Festlegen einer ersten Elektrode (112) des piezoelektrischen Elements (102) auf ein vorbestimmtes Mittenpotential zwischen dem Massepotential und dem Betriebspotential;
- Anlegen des Betriebspotentials an eine zweite Elektrode (113) des piezoelektrischen Elements (102);
- Trennen der zweiten Elektrode (113) von dem Betriebspotential; und
- Anlegen des Massepotentials (120) an die zweite Elektrode.

## Claims

1. Control circuit (100) for a piezoelectric element (102) for injecting fuel into a combustion chamber of an internal combustion engine, having:
- a voltage source (104) which makes available a relatively low electrical potential at a first connecting point (106), a medium electrical potential at a second connecting point (108), and a relatively high electrical potential at a third connecting point (110), wherein the second connecting point (108) is designed for coupling to a first electrode (112) of the piezoelectric element (102);
- a charging switching element (114) which connects a second electrode (113) of the piezoelectric element (102) to the third connecting point (110) of the voltage source (104); and
- a discharging switching element (118) which connects the second electrode (113) of the piezoelectric element (102) to the first connecting point (106) of the voltage source (104),
- **characterized in that** the relatively low electrical potential of the first connecting point (106) of the voltage source (104) is an earth potential (120) of the internal combustion engine.

2. Control circuit (100) according to Claim 1, **characterized in that** the voltage source (104) is designed to be fed from a direct current network (122), wherein the second connecting point (108) and the third connecting point (110) have the same polarity with respect to the earth potential (120) as the direct current network (122).

3. Control circuit (100) according to one of the preceding claims, **characterized in that** a voltage (124) between the relatively high and the medium potential has a higher absolute value that a voltage (126) between the medium and the relatively low potential.

4. Control circuit (100) according to one of the preceding claims, **characterized in that** the voltage source (104) comprises a direct voltage transducer (200), in particular a blocking converter (200) or a single-ended forward converter.

5. Control circuit (100) according to Claim 4, **characterized in that** the direct voltage converter (200) comprises:
- a transformer (202) with a primary winding (204) and a first secondary winding (206) and a second secondary winding (208);
- a primary circuit which includes a primary circuit switching element (210) and the primary winding (204) of the transformer (202);
- a first secondary circuit which includes a first rectifier element (212), a first capacitor (214) and the first secondary winding (206) of the transformer (202); and
- a second secondary circuit which includes a second rectifier element (216), a second capacitor (218) and the second secondary winding (208) of the transformer (202).

6. Control circuit (100) according to Claim 5, **characterized in that** the first capacitor (214) and the second capacitor (218) are connected in series, wherein:
- those connecting ends of the capacitors (214, 218) which are connected to one another are coupled to the second connecting point (108) of the voltage source; and
- the respective other connecting ends of the first capacitor (214) and the second capacitor (218) are coupled to the first connecting point (106) and respectively the third connecting point (110) of the voltage source (104).

7. Control circuit (100) according to Claim 6, **characterized in that** the voltage source (104) comprises a control unit (220) for controlling an overall voltage (222) between the first connecting point (106) and the third connecting point (110), which overall voltage (222) is connected to the first connecting point (106) and third connecting point (110) of the voltage source (104), in particular via a voltage divider (224, 226), and activates the primary circuit switching element (210) cyclically as a function of the overall voltage (222).

8. Control circuit (100) according to Claim 7, **characterized in that** the control unit (220) comprises a characteristic curve (228) which defines a relationship between the overall voltage (222) and an activation period of the primary circuit switching element (210), and in particular between a network voltage (123), the overall voltage (222) and the activation period.

9. Control method for controlling a piezoelectric element (102) for injecting fuel into a combustion chamber of an internal combustion engine, having the following steps:
- provision of an earth potential (120) of the internal combustion engine and of a predetermined operating potential;
- setting of a first electrode (112) of the piezoelectric element (102) to a predetermined central potential between the earth potential and the operating potential;
- application of the operating potential to a second electrode (113) of the piezoelectric element (102);
- disconnection of the second electrode (113) from the operating potential; and
- application of the earth potential (120) to the second electrode.

## Revendications

1. Circuit de commande (100) pour un élément piézoélectrique (102) pour injecter du carburant dans une chambre de combustion d'un moteur à combustion interne, comprenant :
- une source de tension (104) qui délivre un potentiel électrique plus faible sur un premier point de raccordement (106), un potentiel électrique moyen sur un deuxième point de raccordement (108) et un potentiel électrique plus élevé sur un troisième point de raccordement (110), le deuxième point de raccordement (108) étant configuré pour être connecté à une première électrode (112) de l'élément piézoélectrique (102) ;
- un élément de commutation de charge (114) qui relie une deuxième électrode (113) de l'élément piézoélectrique (102) avec le troisième point de raccordement (110) de la source de tension (104) ; et
- un élément de commutation de décharge (118) qui relie la deuxième électrode (113) de l'élément piézoélectrique (102) avec le premier point de raccordement (106) de la source de tension (104) ;
- **caractérisé en ce que** le potentiel électrique le plus faible du premier point de raccordement (106) de la source de tension (104) est un potentiel de masse (120) du moteur à combustion interne.

2. Circuit de commande (100) selon la revendication 1, **caractérisé en ce que** la source de tension (104) est configurée pour être alimentée depuis un réseau de courant continu (122), le deuxième (108) et le troisième (110) point de raccordement présentant une même polarité par rapport au potentiel de masse (120) que celle du réseau de courant continu (122).

3. Circuit de commande (100) selon l'une des revendications précédentes, **caractérisé en ce qu'**une tension (124) entre le potentiel le plus élevé et le potentiel moyen présente une valeur absolue plus élevée qu'une tension (126) entre le potentiel moyen et le potentiel le plus faible.

4. Circuit de commande (100) selon l'une des revendications précédentes, **caractérisé en ce que** la source de tension (104) comprend un convertisseur de tension continue (200), notamment un convertisseur à oscillateur bloqué (200) ou un convertisseur à passage à un cycle.

5. Circuit de commande (100) selon la revendication 4, **caractérisé en ce que** le convertisseur de tension continue (200) comprend :
- un transformateur (202) doté d'un enroulement primaire (204) ainsi que d'un premier (206) et d'un deuxième (208) enroulement secondaire ;
- un circuit primaire qui inclut un élément de commutation de circuit primaire (210) et l'enroulement primaire (204) du transformateur (202) ;
- un premier circuit secondaire qui inclut un premier élément redresseur (212), un premier condensateur (214) et le premier enroulement secondaire (206) du transformateur (202) ; et
- un deuxième circuit secondaire qui inclut un deuxième élément redresseur (216), un deuxième condensateur (218) et le deuxième enroulement secondaire (208) du transformateur (202).

6. Circuit de commande (100) selon la revendication 5, **caractérisé en ce que** le premier (214) et le deuxième (218) condensateur sont branchés en série,
- les extrémités de raccordement des condensateurs (214, 218) qui sont reliées entre elles étant connectées au deuxième point de raccordement (108) de la source de tension ; et
- les autres extrémités de raccordement respectives du premier (214) et du deuxième (218) condensateur étant connectées au premier (106) ou au troisième (110) point de raccordement de la source de tension (104).

7. Circuit de commande (100) selon la revendication 6, **caractérisé en ce que** la source de tension (104) comprend une unité de régulation (220) pour réguler une tension totale (222) entre le premier (106) et le troisième (110) point de raccordement, laquelle est connectée au premier (106) et au troisième (110) point de raccordement de la source de tension (104), notamment par le biais d'un diviseur de tension (224, 226), et active de manière cyclique l'élément de commutation de circuit primaire (210) en fonction de la tension totale (222).

8. Circuit de commande (100) selon la revendication 7, **caractérisé en ce que** l'unité de régulation (220) comprend une courbe caractéristique (228) qui définit une relation entre la tension totale (222) et une durée d'activation de l'élément de commutation de circuit primaire (210) et notamment entre une tension de réseau (123), la tension totale (222) et la durée d'activation.

9. Procédé de commande pour commander un élément piézoélectrique (102) pour injecter du carburant dans une chambre de combustion d'un moteur à combustion interne, comprenant les étapes suivantes :
- Mise à disposition d'un potentiel de masse (120) du moteur à combustion interne et d'un potentiel de service prédéfini ;
- Fixation d'une première électrode (112) de l'élément piézoélectrique (102) à un potentiel moyen prédéfini entre le potentiel de masse et le potentiel de service ;
- Application du potentiel de service à une deuxième électrode (113) de l'élément piézoélectrique (102) ;
- Déconnexion de la deuxième électrode (113) du potentiel de service ; et
- Application du potentiel de masse (120) à la deuxième électrode.
